# EUROPÄISCHE PATENTANMELDUNG

(11) **EP 2 669 119 A1**
(43) Veröffentlichungstag der Anmeldung: **04.12.2013**
(21) Anmeldenummer: 13466008.3
(22) Anmeldetag: 27.05.2013
(51) Int. Cl.: B60R 1/00, B60R 1/08

(54) **Kraftfahrzeug mit zusätzlichem Innenrückspiegel**

(30) Priorität: 29.05.2012 CZ 20120351
(71) Anmelder: Skoda Auto a.s., 293 60 Mlada Boleslav (CZ)
(72) Erfinder: Kraus, Ladislav, 512 36 Horni Branná (CZ); Novotný, Josef, 518 01 Dobruska (CZ)

(57) **Zusammenfassung**

Der zusätzliche Rückblickspiegel (1) ist im Fahrzeuginnenraum in dem Bereich zwischen dem gewöhnlichen Innenrückblickspiegel und dem vorderen Rand des Dachhimmels (3) angeordnet. Der zusätzliche Rückblickspiegel (1) dient zum Beobachten des Rücksitzbankraumes des Fahrzeuges. Die Darstellung der Erfindung liegt darin, dass der zusätzliche Rückblickspiegel (1) einen Halter (2) umfasst, der fest zur Frontscheibe (4) des Fahrzeuges befestigt ist. Dieser Halter (2) und der zusätzliche Rückblickspiegel (1) sind mittels einer Clipverbindung (6) lösbar und schwenkbar miteinander verbunden. Die schwenkbare Clipverbindung (6) wird durch die Backen (7) und den Bolzen (8) gebildet, der zum Halter (2) befestigt ist. Die an der Rückwand des zusätzlichen Rückblickspiegels (1) angebrachten Backen (7) sind mit dem Bolzen (8) schwenkbar verbunden. Der zusätzliche Rückblickspiegel (1) umfasst ein konvexes Spiegelglas (9), das die benötigte konvexe Wölbung aufweist.

## Beschreibung

### Technisches Gebiet

Die Erfindung betrifft einen zusätzlichen Innenrückblickspiegel, der im Fahrzeuginnenraum zwischen dem vorhandenen Innenrückblickspiegel und dem vorderen Rand des Dachhimmels angeordnet und zur Frontscheibe des Fahrzeuges befestigt ist.

### Bisheriger Stand der Technik

Die Nutzung eines zusätzlichen Rückblickspiegels zum Beobachten des Fahrzeuginnenraumes zwecks Überwachung der in den Kindersitzen auf der Rücksitzbank des Personenkraftfahrzeuges sitzenden Kleinkinder sowie die Anordnung solches zusätzlichen Rückblickspiegels im Bereich des vorhandenen Innenrückblickspiegels ist bekannt. Die Befestigung des zusätzlichen Innenrückblickspiegels wird auf verschiedene Art gelöst. Der zusätzliche Innenrückblickspiegel kann mit einem Clip an der Sonnenblende befestigt werden. Diese Lösung ist ziemlich unzuverlässig, sieht "billig" aus und stimmt mit dem Fahrzeuginnenraum nicht überein.

In einer weiteren Ausführung wird die Befestigung bereits bei der Fahrzeugkonstruktion berücksichtigt und zwar so, dass der klappbare Zusatz-Rückblickspiegel aus dem Dachhimmel herausgeklappt werden kann. Der Nachteil dieser Lösung liegt in seiner komplizierten und aufwendigen Konstruktion. Diese Lösung erfordert im Bereich des Dachhimmels einen größeren Einbauraum. Ferner entsteht ein Problem mit der Steuerung des Spiegeleinbaues, da wir zwei Varianten von Bauteilen haben, sowohl für die Variante mit dem Spiegel, als auch ohne Spiegel.

Als weitere Lösung wird die Befestigung des zusätzlichen Innenrückblickspiegels mit zusätzlichen Halterungen zum vorhandenen Innenrückblickspiegel verwendet. Aus dem Dokument DE3827995C2 ist ein zusätzlicher Innenrückblickspiegel bekannt, der unter dem vorhandenen Innenrückblickspiegel angeordnet ist. Dieser zusätzliche Rückblickspiegel ist mit einer Halterung zu dem gewöhnlichen Innenrückblickspiegel befestigt. Der Nachteil dieser Lösung liegt in ihrer komplizierten und teueren Konstruktion, die sowohl einen zusätzlichen Halter, als auch zusätzliche konstruktive Anpassungen des gewöhnlichen Innenrückblickspiegels für die Befestigung des Halters des zusätzlichen Rückblickspiegels erfordert.

### Darstellung der Erfindung

Die Aufgabe wird durch den erfindungsgemäßen zusätzlichen Rückblickspiegel gelöst, der im Fahrzeuginnenraum in einer vorteilhaften Ausführung in dem Bereich zwischen dem gewöhnlichen Innenrückblickspiegel und dem vorderen Rand des Dachhimmels angeordnet ist. Der zusätzliche Rückblickspiegel dient zum Beobachten des Rücksitzbankraumes des Fahrzeuges.

Die Darstellung der Erfindung liegt darin, dass der zusätzliche Rückblickspiegel einen Halter umfasst, der fest zur Frontscheibe des Fahrzeuges befestigt ist. Dieser Halter und der zusätzliche Rückblickspiegel sind mittels einer Clipverbindung lösbar und schwenkbar miteinander verbunden. Die schwenkbare Clipverbindung umfasst einen zum Halter befestigten Bolzen und die Backen. Die Backen sind an der Rückseite des zusätzlichen Rückblickspiegels angebracht und schwenkbar mit dem Bolzen verbunden. Diese schwenkbare Clipverbindung ermöglicht die Einstellung des Spiegels in die für das Beobachten der Fahrzeuginsassen im Fondbereich des Fahrzeuges benötigte Beobachtungsposition. Die lösbare Verbindung des Halters mit dem zusätzlichen Rückblickspiegel ermöglicht einen einfachen Austausch des zusätzlichen Rückblickspiegels für einen ähnlichen zusätzlichen Rückblickspiegel, jedoch mit anderer Wölbung der Spiegelfläche.

Der zusätzliche Rückblickspiegel weist auf seiner Vorderseite ein konvexes Spiegelglas auf, das für das Beobachten des Fondbereiches geeignet gewölbt ist. Das konvexe Spiegelglas kann zur Vorderseite des zusätzlichen Rückblickspiegels fest oder lösbar befestigt werden.

Bei einer lösbaren Verbindung des konvexen Spiegelglases mit dem zusätzlichen Rückblickspiegel weist der zusätzliche Rückblickspiegel eine Rastöffnung und das konvexe Spiegelglas ein Sperrelement auf. Diese Rastöffnung und das Sperrelement ermöglichen eine lösbare Verbindung und die Verrastung des konvexen Spiegelglases an der Vorderseite des zusätzlichen Rückblickspiegels.

### Übersicht der Figuren der Zeichnungen

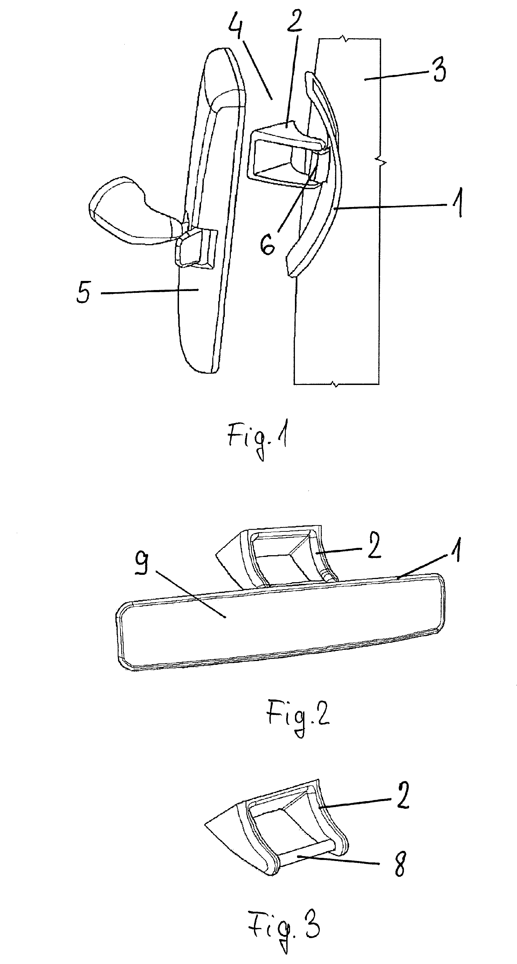

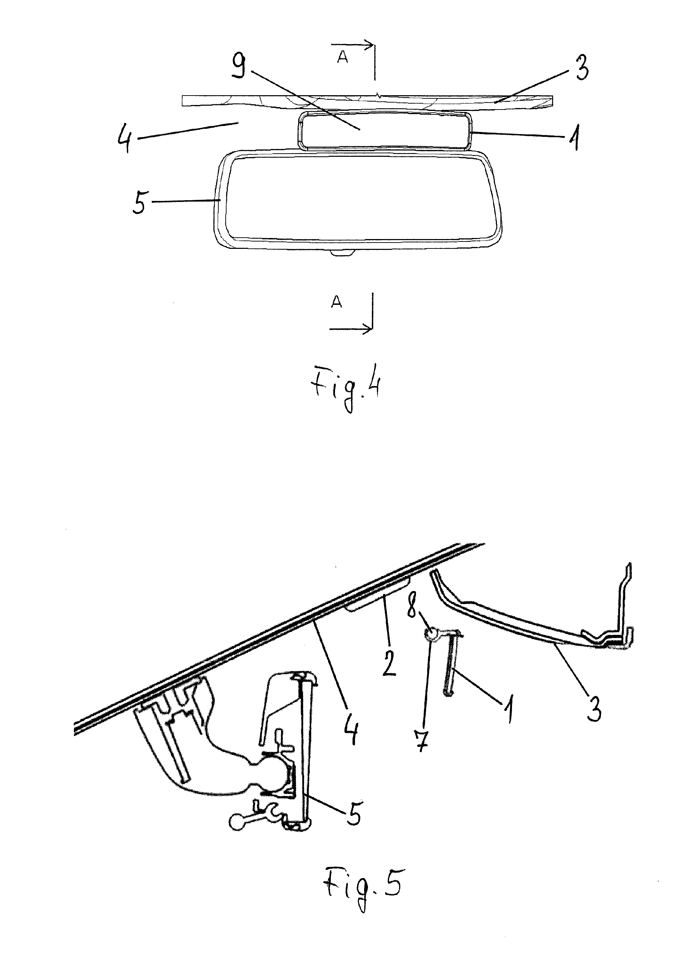

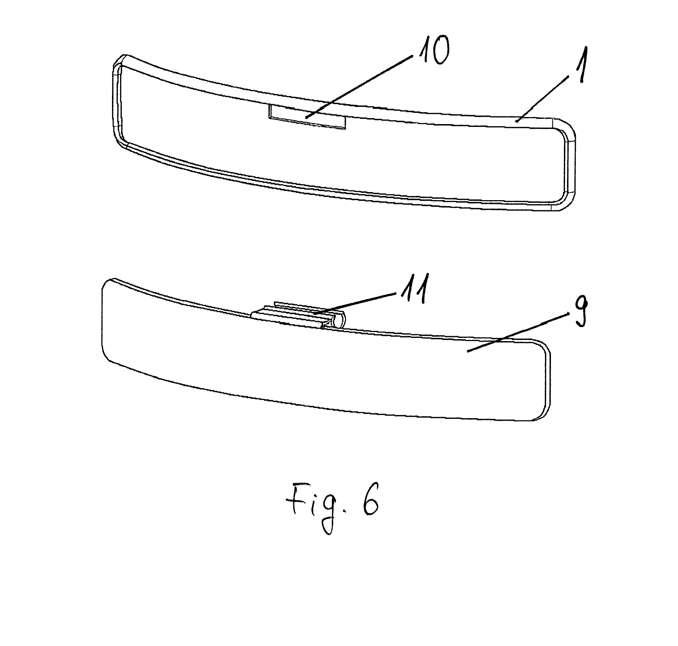

In Fig. 1 ist in einer perspektivischen Gesamtansicht von unten der Bereich des gewöhnlichen Innenrückblickspiegels mit der Anordnung des zusätzlichen Rückblickspiegels, in Fig. 2 in einer perspektivischen Ansicht der separate zusätzliche Rückblickspiegel, in Fig. 3 der separate Halter des zusätzlichen Rückblickspiegels, in Fig. 4 in einer Vorderansicht der gewöhnliche Innenrückblickspiegel einschließlich des zusätzlichen Rückblickspiegels, in Fig. 5 in einem seitlichen Schnitt nach Fig. 3 der Bereich des gewöhnlichen Innenrückblickspiegels einschließlich des zusätzlichen Rückblickspiegels, in Fig. 6 in einer Vorderansicht die Vorderseite des eigentlichen zusätzlichen Rückblickspiegels mit abtrennbarem konvexen Spiegelglas dargestellt.

### Ausführungsbeispiele der Erfindung

In Fig. 1 ist ein Bereich im Fahrzeuginnenraum dargestellt, in dem der gewöhnliche Innenrückblickspiegel 5 an der Frontscheibe 4 unter dem vorderen Rand des Dachhimmels 3 angeordnet ist. In diesem Bereich zwischen dem gewöhnlichen Innenrückblickspiegels 5 und dem vorderen Rand des Dachhimmels 3 ist der zusätzliche Rückblickspiegel 1 angeordnet, wie den Fig. 1, 4 und 5 zu entnehmen ist. Der zusätzliche Rückblickspiegel 1 umfasst einen Halter 2 nach Fig. 2 und 3, der zur Frontscheibe 4 befestigt ist. Der Halter 2 ist aus einem Kunststoff ausgebildet und kann auf die Frontscheibe 4 mit einem Klebstoff, Doppelklebeband usw. aufgeklebt werden. Der zusätzliche Rückblickspiegel 1 ist mit dem Halter 2 mittels einer Clipverbindung 6 lösbar und schwenkbar verbunden. Die schwenkbare Clipverbindung 6 wird durch einen Bolzen 8 und Backen 7 gebildet und zwar so, dass der Bolzen 8 zum Halter 2 befestigt ist und die Backen 7 an der Rückseite des zusätzlichen Rückblickspiegels 1 angebracht und schwenkbar mit dem Bolzen 8 verbunden sind. Diese Lagerung des Bolzens 8 in Backen 7 ermöglicht die Schwenkbewegung des Bolzens 8. So gebildete schwenkbare Clipverbindung 6 ermöglicht die Einstellung des zusätzlichen Rückblickspiegels 1 in die für das Beobachten der Fahrzeuginsassen im Fondbereich des Fahrzeuges benötigte Beobachtungsposition.

Der zusätzliche Rückblickspiegel 1 weist auf seiner Vorderseite ein konvexes Spiegelglas 9 auf, das für das Beobachten des Fondbereiches geeignet gewölbt ist. Das konvexe Spiegelglas 9 kann zum zusätzlichen Rückblickspiegel 1 fest befestigt werden, z.B. durch Kleben.

Die Clipverbindung 6 ermöglicht ein einfaches Abnehmen der Backen 7 des zusätzlichen Rückblickspiegels 1 vom Bolzen 8 des Halters 2. Die lösbare Verbindung des Halters 2 mit dem zusätzlichen Rückblickspiegel 1 ermöglicht einen einfachen Austausch des zusätzlichen Rückblickspiegels 1 für einen ähnlichen zusätzlichen Rückblickspiegel 1, jedoch mit anderer Wölbung der Spiegelfläche.

Anhand der oben genannten Beschreibung ist die eigentliche Montage leicht durchführbar. Der zusätzliche Rückblickspiegel 1 wird mit seinen Backen 7 am Bolzen 8 des Halters 2 eingerastet. Nachfolgend wird der benötigte Beobachtungswinkel durch die Verschwenkung des zusätzlichen Rückblickspiegels 1 eingestellt. Der Ausbau erfolgt einfach durch Entrasten der Backen 7 vom Bolzen 8 des Halters 2.

Ein weiteres Ausführungsbeispiel bietet solche Lösung an, dass die Befestigung des konvexen Spiegelglases 9 zur Vorderseite des zusätzlichen Rückblickspiegels 1 lösbar ausgeführt werden kann. Bei einer lösbaren Verbindung des konvexen Spiegelglases 9 mit dem zusätzlichen Rückblickspiegel 1 nach Fig. 6 weist der zusätzliche Rückblickspiegel 1 eine Rastöffnung 10 und das konvexe Spiegelglas 9 ein Sperrelement 11 auf. Diese Rastöffnung 10 und das Sperrelement 11 ermöglichen eine lösbare Verbindung und die Verrastung des konvexen Spiegelglases 9 an der Vorderseite des zusätzlichen Rückblickspiegels 1.

Bei diesem Ausführungsbeispiel kann der Ein- und Ausbau bzw. Austausch auf zweierlei Weise erfolgen. Entweder in gleicher Weise wie bei der oben genannten ersten Ausführung, d.h. dass die Backen 7 am Bolzen 8 des Halters 2 eingerastet oder entrastet werden. Ausgewechselt wird dann der komplette zusätzliche Rückblickspiegel. Oder so, dass der zusätzliche Rückblickspiegel 1 mit seinen Backen 7 weiterhin am Bolzen 8 des Halters 2 eingerastet bleibt und nur die Varianten des konvexen Spiegelglases 9 mit unterschiedlicher Wölbung der Spiegelfläche ausgewechselt werden. Der Einbau erfolgt so, dass das Sperrelement 11 des konvexen Spiegelglases 9 in die Rastöffnung 10 des zusätzlichen Rückblickspiegel 1 einrastet und so wird das konvexe Spiegelglas 9 an der Vorderseite des zusätzlichen Rückblickspiegels 1 verrastet. Der Ausbau erfolgt in der rückwärtigen Reihenfolge und zwar so, dass das Sperrelement 11 des konvexen Spiegelglases 9 aus der Rastöffnung 10 des zusätzlichen Rückblickspiegels 1 entrastet wird. Nachfolgend kann ähnliches konvexes Spiegelglas 9 mit unterschiedlicher Wölbung der Spiegelfläche eingebaut werden.

### Gewerbliche Anwendbarkeit

Der erfindungsgemäße zusätzliche Rückblickspiegel kann in allen Kraftfahrzeugen zum Beobachten des Rücksitzbankraumes des Fahrzeuges und vorteilhaft bei der Beförderung von Kindern, Tieren und Gegenständen angewendet werden, die während der Fahrt beaufsichtigt werden müssen.

### Verwendete Bezeichnungen

- 1: Zusätzlicher Innenrückblickspiegel für Kraftfahrzeuge
- 2: Halter des zusätzlichen Innenrückblickspiegels
- 3: Fahrzeugdachhimmel
- 4: Frontscheibe des Fahrzeuges
- 5: gewöhnlicher Innenrückblickspiegel des Fahrzeuges
- 6: schwenkbare Clipverbindung
- 7: Backen des zusätzlichen Rückblickspiegels
- 8: Bolzen des Halters
- 9: konvexes Spiegelglas
- 10: Rastöffnung des zusätzlichen Rückblickspiegels
- 11: Sperrelement des konvexen Spiegelglases

## Patentansprüche

1. Der im Fahrzeuginnenraum in dem Bereich zwischen dem gewöhnlichen Innenrückblickspiegel (5) und dem vorderen Rand des Dachhimmels (3) angeordnete und zum Beobachten des Rücksitzbankraumes des Fahrzeuges dienende zusätzliche Rückblickspiegel (1), **dadurch gekennzeichnet, das** s er einen Halter (2) umfasst, der fest mit der Frontscheibe (4) des Fahrzeuges verbunden ist, wobei der Halter (2) und der zusätzliche Rückblickspiegel (1) mittels einer Clipverbindung (6) lösbar und schwenkbar miteinander verbunden sind.

2. Der zusätzliche Rückblickspiegel (1) nach Anspruch 1 **dadurch gekennzeichnet, dass** die schwenkbare Clipverbindung (6) gebildet wird durch einen
Bolzen (8), der zum Halter (2) befestigt ist und
Backen (7), die an der Rückwand des zusätzlichen Rückblickspiegels (1) angebracht und mit dem Bolzen (8) schwenkbar verbunden sind.

3. Der zusätzliche Rückblickspiegel (1) nach vorherigen Ansprüchen **dadurch gekennzeichnet, dass** er ein konvexes Spiegelglas (9) umfasst, das die benötigte konvexe Wölbung aufweist.

4. Der zusätzliche Rückblickspiegel (1) nach vorherigen Ansprüchen **dadurch gekennzeichnet, dass** das konvexe Spiegelglas (9) mit dem zusätzlichen Rückblickspiegel (1) fest verbunden ist, wobei die Backen (7) des zusätzlichen Rückblickspiegels (1) zum Bolzen (8) des Halters (2) zwecks Austausches des zusätzlichen Rückblickspiegels (1) für ein konvexes Spiegelglas (9) mit unterschiedlicher Wölbung lösbar befestigt sind.

5. Der zusätzliche Rückblickspiegel (1) nach vorherigen Ansprüchen 1 bis 3 **dadurch gekennzeichnet, dass** er eine Rastöffnung (10) aufweist und das konvexe Spiegelglas (9) ein Sperrelement (11) umfasst, mittels dessen das konvexe Spiegelglas (9) mit dem zusätzlichen Rückblickspiegel (1) lösbar verbunden ist.
